# EUROPEAN PATENT SPECIFICATION

(11) **EP 2 728 181 B1**
(45) Date of publication and mention of the grant of the patent: **30.08.2017**
(21) Application number: 12765656.9
(22) Date of filing: 31.03.2012
(51) Int. Cl.: F03G 7/00, F25B 9/00

(54) **DOUBLE-ACTION SINGLE-STAGE TRAVELING WAVE THERMOACOUSTIC SYSTEM**
EINSTUFIGES THERMOAKUSTISCHES WANDERWELLENSYSTEM MIT DOPPELTEM WIRKUNGSMECHANISMUS
SYSTÈME THERMOACOUSTIQUE DOUBLE ACTION MONOÉTAGE À ONDE PROGRESSIVE

(30) Priority: 01.04.2011 CN 201110082230; 22.04.2011 CN 201110101971
(43) Date of publication of application: 07.05.2014
(73) Proprietor: Lihan Thermoacoustic Technologies (Shenzhen) Co., Ltd, Guangdong 518055 (CN)
(72) Inventor: LUO, Ercang, Guangdong 518055 (CN); DAI, Wei, Guangdong 518055 (CN); HU, Jianying, Guangdong 518055 (CN); WU, Zhanghua, Guangdong 518055 (CN); YU, Guoyao, Guangdong 518055 (CN); LI, Haibing, Guangdong 518055 (CN)
(74) Representative: Gill Jennings & Every LLP
(86) International application number: PCT/CN2012/073390
(87) International publication number: WO 2012/130172

(56) References cited:
- EP-A2- 2 312 239
- CN-A- 1 766 314
- CN-A- 1 766 464
- CN-A- 1 818 512
- CN-A- 1 818 512
- CN-A- 101 294 554
- CN-A- 101 440 791
- CN-A- 101 726 131
- CN-A- 101 726 131
- CN-A- 101 865 554
- DE-A1- 4 220 840
- JP-A- 2007 237 020

## Description

### FIELD OF THE TECHNOLOGY

The present invention relates to energy power and low-temperature cooling technology, in particular, to a single-stage double-acting traveling-wave thermoacoustic system .

### BACKGROUND

When propagating in a gas, acoustic waves will enable propagation medium gas to generate fluctuations of pressure, displacement, and temperature. When interacting with a fixed boundary, the gas can induce conversion between acoustic energy and heat energy, which is called thermoacoustic effect.

A thermoacoustic system is an energy conversion system designed using the thermoacoustic effect principle, which may convert heat energy into acoustic energy, or convert acoustic energy into heat energy. Thermoacoustic systems can be divided into two kinds: thermoacoustic engines and thermoacoustic refrigerators, wherein thermoacoustic engines include traveling-wave thermoacoustic engines and Stirling engines, and thermoacoustic refrigerators include traveling-wave thermoacoustic refrigerators, pulse tube refrigerators and Stirling refrigerators.

In the above thermoacoustic systems, the traveling-wave thermoacoustic engines and refrigerators use air or inert gases, such as helium or nitrogen, as working medium. They have advantages in high efficiency, safety and long service life, thus having attracted widespread public attention. Hitherto employing a thermoacoustic engine in power generation and employing a thermoacoustic refrigerator in low-temperature refrigeration have already been successful.

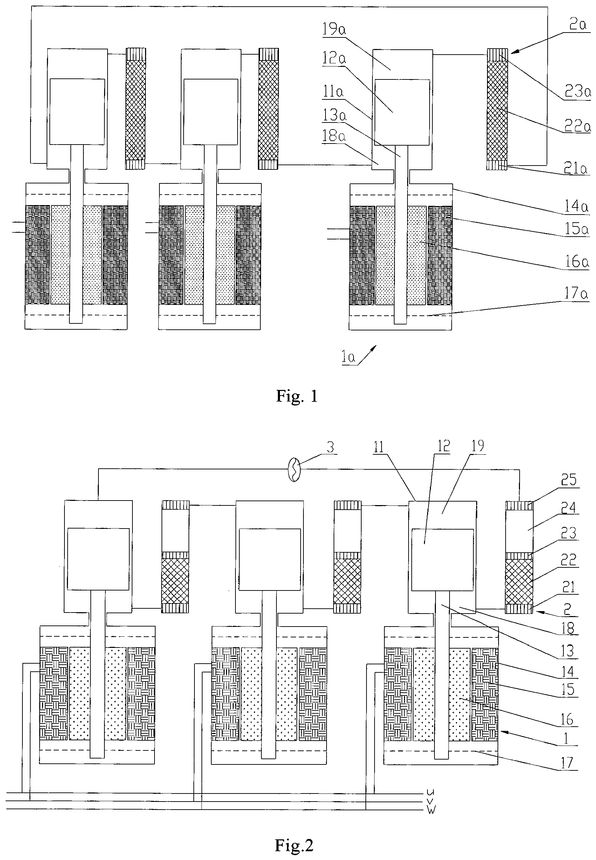

Refer to FIG. 1 being a schematic view of a prior traveling-wave thermoacoustic system.

As shown in FIG. 1, the traveling-wave thermoacoustic system includes three elementary units, where each unit includes a linear motor 1a and a thermoacoustic conversion device 2a.

The linear motor 1a includes a cylinder 11a, a piston 12a, a piston rod 13a, a motor housing 14a, a stator 15a, a mover 16a, and an Oxford spring 17a.

The stator 15a and the inner wall of the motor housing 14a are fixedly connected; the mover 16a and the stator 15a are of clearance fit; the piston rod 13a and the mover 16a are fixedly connected; the piston rod 13a and the Oxford spring 17a are fixedly connected; when the linear motor 1a is working, the mover 16a drives the piston 12a through the piston rod 13a to make it perform linear reciprocating motion within the cylinder 11a.

The thermoacoustic conversion device 2a includes a first heat exchanger 21a, a heat regenerator 22a, and a second heat exchanger 23a connected in sequence. The first heat exchanger 21a is connected to a cylinder cavity, i.e., a compression chamber 18a, of a linear motor 1a; the second heat exchanger 23a is connected to a cylinder cavity, i.e., an expansion chamber 19a, of another linear motor 1a; each thermoacoustic conversion device 2a is coupled to each linear motor 1a in sequence, thus, the traveling-wave thermoacoustic system constitutes a loop for medium flow.

When the traveling-wave thermoacoustic system is working as a refrigerator, electric power is supplied to the linear motor 1a. The mover 16a drives the piston 12a performing a linear reciprocating motion within the cylinder 11a, generating acoustic energy entering into the main heat exchanger 21a. Through the heat regenerator 22a, within which most of the acoustic energy has been consumed, producing cooling effect so as to lower the temperature of the non-normal temperature heat exchanger. The remaining acoustic energy once again comes out from the second heat exchanger 23a, feeds back to the expansion chamber 19a of the linear motor, and then transfers to a piston 12a of the second linear motor 1a.

When the traveling-wave thermoacoustic system is working as an engine, acoustic wave absorbs heat energy and converts it into acoustic energy inside the heat regenerator 22a and the second heat exchanger 23a. The acoustic energy is divided into two parts at the piston 12a, one of which enters the compression chamber 18a and fed back into another heat regenerator 22a, another of which is converted into output power through the linear motor 1a.

During the course of study for the present invention, the inventor has figured out technical limitations as follows: in this traveling-wave thermoacoustic system, because the temperature of the gas medium comes out from the second heat exchanger 23a connected to the heat regenerator 22a is relatively high or low, the temperature of the gas medium fed back to the expansion chamber 19a is also relatively high or low, therefore, the cylinder 11a and the piston 12a are working at high temperature, which produces high requirement to the manufacturing of the piston 12a, thereby raising manufacturing cost of the traveling-wave thermoacoustic system and shortening service life of the linear motor.

In addition, the thermoacoustic system is of loop structure, which is easy to make the gas medium producing DC loss between the compression chamber 18a and the expansion chamber 19a, causing energy loss, reducing thermoacoustic conversion efficiency, and thereby reducing the working performance of the traveling-wave thermoacoustic system.

DE 42 20 840 A1 discloses a single-stage double acting traveling-wave thermoacoustic system according to the preamble of claim 1.

JP 2007 237020 A discloses a thermoacoustic device comprising a thermoacoustic resonator portion and a temperature gradient generator, the generator is provided in a loop pipe and comprises a heat radiating part, a heat storage part, a heating unit and another heat radiating part in sequence.

### SUMMARY

The present invention provides a single-stage double-acting traveling-wave thermoacoustic system according to claim 1 for solving the defects in the prior art, which can improve the thermoacoustic conversion efficiency, reducing manufacturing cost and extending its service life.

The present invention provides a single-stage double-acting traveling-wave thermoacoustic system; each elementary unit includes a linear motor and a thermoacoustic conversion device. The linear motor includes cylinder and piston, where the piston can perform a straight reciprocating motion in the cylinder. The thermoacoustic conversion device includes a first heat exchanger, a heat regenerator, a second heat exchanger, a thermal buffer tube and a third heat exchanger connected in sequence;

The first heat exchanger and the third heat exchanger of each thermoacoustic conversion device are connected to cylinder cavities of different linear motors respectively, forming a loop structure for flow of a gas medium.

The single-stage double-acting traveling-wave thermoacoustic system provided in the present invention, while comparing to the prior art, includes a thermal buffer tube and a third heat exchanger, which makes the temperature of the gas medium fed back to the cylinder cavity of another linear motor be close to the room temperature, so as to ensure the piston and the cylinder working at room temperature, thus reducing the manufacturing cost of the single-stage double-acting traveling-wave thermoacoustic system, and extending its service life.

Also, the single-stage double-acting traveling-wave thermoacoustic system provided in the present invention is provided with DC suppressor in a loop structure. Through the DC suppressor, the DC loss caused by the gas medium in the loop structure can be avoided, which can improve the conversion efficiency of the single-stage double-acting traveling-wave thermoacoustic system and lower the working performance.

### BRIEF DESCRIPTION OF THE DRAWINGS

Figure 1 is a schematic view of the prior traveling-wave thermoacoustic system;
Figure 2 is a schematic view of the single-stage double-acting traveling-wave thermoacoustic system according to the first embodiment of the present invention;
Figure 3 is a schematic view of the single-stage double-acting traveling-wave thermoacoustic system according to the second embodiment of the present invention;
Figure 4 is a schematic view of the single-stage double-acting traveling-wave thermoacoustic system according to the third embodiment of the present invention;
Figure 5 is a schematic view of the single-stage double-acting traveling-wave thermoacoustic system according to the fourth embodiment of the present invention;
Figure 6 is a schematic view of an exemplary single-stage double-acting traveling-wave thermoacoustic system.

**Reference signs:**

| | | |
|---|---|---|
| 1. Linear motor | 11. Cylinder | 12.piston |
| 13. Piston rod | 14. Motor housing | 15. Stator |
| 16. Mover | 17. Oxford spring | 18. Compression chamber |
| 19. Expansion chamber | 2. Thermoacoustic conversion device | 21. First heat exchanger |
| 22. Heat regenerator | 23. Second heat exchanger | 24. Thermal buffer tube |
| 25. Third heat exchanger | 189. Compression-expansion chamber | 3. DC suppressor |

### DETAILED DESCRIPTION

A single-stage double-acting traveling-wave thermoacoustic system is provided in the present invention, which includes three elementary units, each unit has a linear motor and a thermoacoustic conversion device; the piston can perform a straight reciprocating motion in the cylinder. The thermoacoustic conversion device includes a first heat exchanger, a heat regenerator, a second heat exchanger, a thermal buffer tube and a third heat exchanger connected in sequence. The first heat exchanger and the third heat exchanger of each thermoacoustic conversion device are connected to cylinder cavities of different linear motors respectively, forming a loop structure for flow of a gas medium.

Due to the thermoacoustic conversion device being provided with the thermal buffer tube and the third heat exchanger, the single-stage double-acting traveling-wave thermoacoustic system can make the temperature of the gas medium fed back to the cylinder cavity of the linear motor be close to the room temperature, thus ensuring the piston and the cylinder working at room temperature, improving the thermoacoustic conversion efficiency, and reducing the production costs and improve its service life.

Based on the above technical solutions, at least one DC suppressor is mounted on the connecting pipeline of the loop structure, through which the DC loss caused by the gas medium in the loop structure can be avoided, so as improve the thermoacoustic conversion efficiency the single-stage double-acting traveling-wave thermoacoustic system. The DC suppressor can either be mounted on the connecting pipeline between the first heat exchanger and the cylinder cavity, or be mounted on the connecting pipeline between the third heat exchanger and the cylinder cavity. Preferably, the DC suppressor is a jet pump or an elastic diaphragm capsule.

There can be several of design forms for the cylinder cavity of the linear motor depending on the relative positions. The connecting modes between the first heat exchanger and the third heat exchanger in the thermoacoustic conversion device and the cylinder cavity of the linear motor can vary, which are capable of forming multiple loop structures with different paths. For example:

Each linear motor may include two cylinder cavities, which are respectively depicted as a compression chamber and an expansion chamber in light of different heat exchangers they are connected. The compression chamber is connected to the first heat exchanger, and the expansion chamber is connected to the third heat exchanger.

Means for obtaining two cylinder cavities can be either: there is only one piston in the linear motor, and two cylinder cavities are formed at two sides of the piston; or there is only one piston in the linear motor and the shape of the cylinder, and the piston is of a ladder structure mutually matched; two cylinder cavities are formed at different ladders on the same side of the piston. Or again, there are two pistons in the linear motor which are provided at two ends of the linear motor respectively, and two cylinder cavities are positioned at two ends of the linear motor respectively.

Each linear motor may as well include one cylinder cavity which is connected to the first heat exchanger and the third heat exchanger of different heat conversion devices respectively.

Means for obtaining one cylinder cavity can be either: there is one piston in the linear motor formed at one side of the piston. Or there may be multiple cylinder cavities, only one of which is connected to the heat exchanger.

The different loop structures formed by the connecting mode between the cylinder cavity and heat exchanger are related to the working phase of the gas medium. The working efficiency can be improved when the loop structure is cooperating with appropriate quantity of the elementary units.

For example, the working surfaces of the piston in each cylinder cavity can be arranged as parallel and in opposite directions and the correspondent quantity of the elementary units is three or four. Or, the working surface of the piston in each cylinder cavity is parallel and in the same direction and the correspondent quantity of the elementary units is four, five or six.

A plurality of embodiments can be obtained through combinations of the design factors such as the quantity and position of the cylinder cavity, the quantity of the loop structure and the elementary unit. In an attempt to enable the person skilled in the art to better understand the technical solutions of the present invention, further elaboration of the present invention will be set forth as follows in conjunction with figures and embodiments.

Referring to figure 2, which is a schematic view of the single-stage double-acting traveling-wave thermoacoustic system provided in the first embodiment of the present invention.

In the first embodiment of the present invention, a single-stage double-acting traveling-wave thermoacoustic system includes three elementary units. In figure 2, only the reference signs of each component of the elementary unit at the right end of the figure are indicated. Because the components of other two elementary units are identical to that of this elementary unit, therefore, same components are not indicated in figure 2, in order to simplify the figure.

Each elementary unit includes a linear motor 1 and a thermoacoustic conversion device 2. In each elementary unit, the thermoacoustic conversion device 2 is mounted at the right side of the linear motor 1 (shown in figure), the linear motor 1 includes a cylinder 11, a piston 12, a piston rod 13, a motor housing 14, a stator 15, a mover 16 and an Oxford spring 17.

The piston 12 and the cylinder 11 are minimal clearance fitted with each other, and the fitting clearance may be 0.01-0.1mm; the piston 12 can perform a straight reciprocating motion in the cylinder 11; the stator 15 is fixed on the inner wall of the motor housing 14; the mover 16 is fixed with the piston rod 13; the mover 16 is fitted with the stator 15; appropriate clearance is provided between the mover 16 and the stator 15; the piston rod 13 is minimal clearance fitted with the neck of the motor housing 14; the mover 16 may drive the piston 12 to perform a straight reciprocating motion in the cylinder 11.

The thermoacoustic conversion device 2 includes a first heat exchanger 21, a heat regenerator 22, a second heat exchanger 23, a thermal buffer tube 24 and a third heat exchanger 25.

In the present embodiment, the number of the cylinder 11 and the piston 12 in each linear motor 1 is one, and two cylinder cavities are formed at two sides of the piston. Preferably, the working surfaces of the piston 12 in each cylinder cavity are parallel and in opposite directions, the working surfaces of the piston described herein refer to the surfaces being capable of interacting with the gas medium in the cylinder 11 directly. The cylinder cavity of the cylinder 11 is divided into a compression chamber 18 and an expansion chamber 19 by the piston 12 when the piston 12 is working.

In each elementary unit, the compression chamber 18 of the cylinder 11 is connected to the first heat exchanger 21 of the thermoacoustic conversion device in the same elementary unit, and the expansion chamber 19 of the cylinder 11 is connected to the third heat exchanger 25 of the thermoacoustic conversion device in another elementary unit.

When the working surfaces of the piston 12 in each cylinder are parallel and in opposite directions, three or four elementary units are provided preferably. Three linear motors 1 in the present embodiment are switch-in to the three-phase alternating current through delta connection; the phase difference of the current of the three linear motors 1 is 120 degrees. Therefore, the phase difference of volume flow of the gas medium in the compression chamber 18 connected to the first heat exchanger 21 and the expansion chamber 19 connected to the third heat exchanger 25 is also 120 degrees.

There is a DC suppressor 3 provided on the connecting pipeline of the third heat exchanger 25 and the expansion chamber 19, particularly, the DC suppressor 3 may be an elastic diaphragm capsule in which a elastic diaphragm is provided. Under the driving of the air flow, the diaphragm only allows the gas medium to perform a reciprocating motion within the elastic range of the diaphragm, but not allows the gas medium to flow through the diaphragm directly and causing DC loss. Therefore, the thermoacoustic conversion efficiency of the single-stage double-acting traveling-wave thermoacoustic system and the working performance can be improved.

Due to the cascaded loop structure of the single-stage double-acting traveling-wave thermoacoustic system in the present embodiment, a DC suppressor 3 can also be mounted on the connecting pipeline of the first heat exchanger 21 and the compression chamber 18.

Certainly, each component in the present embodiment can also be connected by means as follows:

In each elementary unit, the expansion chamber 19 of the cylinder 11 is connected to the first heat exchanger 21 of the thermoacoustic conversion device 2 in the same elementary unit, and the compression chamber 18 is connected to the third heat exchanger 25 of the thermoacoustic conversion device 2 in another elementary unit, so as to form a loop structure for the gas medium.

The respective working process of the thermoacoustic conversion device according to the present embodiment when it acts as a thermoacoustic engine, a thermoacoustic refrigerator and a thermoacoustic heat pump will be described respectively hereinafter:

It should be first noted that, when the phase difference of volume flow between two ends of the thermoacoustic conversion device 2 lies in the range of 90-150 degrees, the thermoacoustic conversion efficiency of the thermoacoustic conversion device 2 is high.

When the thermoacoustic conversion device 2 is used as a thermoacoustic engine, the first heat exchanger 21 and the third heat exchanger 25 are under the condition of room temperature, the second heat exchanger 23 is heated to a high temperature.

When the temperature of the second heat exchanger 23 reaches a threshold, the sound power of the gas medium enters the thermoacoustic conversion device 2 from the compression chamber 18, which firstly enters the first heat exchanger 21, and then the heat regenerator 22 and the second heat exchanger 23, the gas medium in the heat regenerator 22 and the second heat exchanger 23 absorbs heat and converts heat to sound power, and the sound power is enlarged, then the gas medium enters the expansion chamber 19 of another linear motor 1 through the thermal buffer tube 24 and the third heat exchanger 25, after the sound power in the expansion chamber 19 is absorbed by the piston 12, the sound power is divided into two parts by the piston 12, one part of which is fed back to the compression chamber 18, enters another thermoacoustic conversion device 2, and the other part is converted into output power by the linear motor 1.

The phase difference of the current of the three linear motors 1 is 120 degrees; they can be switch-in to the three-phase AC power grid after an appropriate transformation. The whole process of power generating is very simple.

When the thermoacoustic conversion device 2 is a thermoacoustic refrigerator, the first heat exchanger 21 and the third heat exchanger 25 are under the condition of the room temperature. Three-phase power inputs power to the three linear motors 1, driving the piston 12 performing reciprocating motion to convert the power into sound power. The sound power enters thermoacoustic conversion device 2 from the compression chamber 19 of the cylinder 11. Most sound energy is consumed in the heat regenerator 22 and causes cooling effect at the same time, which makes the temperature of the second heat exchanger 23 falls. The rest of the sound power passes through the thermal buffer tube 24, comes out from the third heat exchanger 25 and enters another expansion chamber 19 of the linear motor 1, feeds back to the piston 12.

Using three-phase AC as input power can directly obtain an ideal phase difference between the pistons 12, which is convenient for practical use.

When the thermoacoustic conversion device 2 is a thermoacoustic heat pump, the compression chamber 18 and the expansion chamber 19 transplace with each other (in the actual system, the functions of the compression chamber 18 and the expansion chamber 19 can be interchanged only by changing the phase between the current), the first heat exchanger 21 and the third heat exchanger 25 are at room temperature. Three-phase power inputs power to the three linear motor 1, driving the piston 12 to perform a reciprocating motion to convert the power into sound power, the sound power enters thermoacoustic conversion device 2 of another elementary unit from the compression chamber 18 of the cylinder 11, firstly passes through the third heat exchanger 25 and the thermal buffer tube 24, most sound energy is then consumed in the heat regenerator 22 and pump the heat from the first heat exchanger 21 to the second heat exchanger 23, making the temperature of the second heat exchanger 23 rise, and causing heating effect. The rest sound power passes through and comes out from the first heat exchanger 21, enters the expansion chamber 19 of the linear motor 1, feeds back to the piston 12.

Using three-phase AC power as input power can directly obtain ideal phase difference between the pistons 12, which is convenient for practical use.

It can be seen from the above expression that, in the present embodiment, although the second heat exchanger 23 is not working at a normal temperature, however, due to the thermoacoustic conversion device 2 of the present embodiment being provided with the thermal buffer tube 24 and the third heat exchanger 25, through the cooling effect of the thermal buffer tube 24 and the third heat exchanger 25 to the gas medium, the gas medium entered into the expansion chamber 19 is close to the room temperature, therefore, the piston 12 can work at the room temperature, thereby reducing processing difficulty of the piston 12, reducing processing cost and extending service life of the linear motor 1 at the same time.

Meanwhile, in the present embodiment, a DC suppressor 3 is provided on the loop structure, which cuts off the DC channel, retrains the energy loss caused by DC in the loop structure, improves the thermoacoustic energy conversion efficiency of the thermoacoustic conversion device 2, thereby it improves the working performance of the single-stage double-acting traveling-wave thermoacoustic system.

It should be noted that, in order to coordinate with the phase relationship of the gas medium to reach maximum working efficiency, when there are three elementary units, it is preferable to ensure that one working surface of the piston 12 is in the opposite direction of other working surfaces. In the present embodiment, the working surface in the compression chamber 18 is in the opposite direction of the working surface of in the expansion chamber 19. That is to say, in each linear motor, the expansion chamber 19 has to be in an expanded state when the compression chamber 18 is in a compressed state. If the expansion chamber 19 is also in a compressed state when the compression chamber 18 is in a compassed state, then the phase difference of volume flow between two ends of the thermoacoustic conversion device 2 is 60 degrees, thereby causing great reduction of the thermoacoustic conversion efficiency of the thermoacoustic conversion device 2.

In addition, there can be four elementary units in the present embodiment, using the above loop structure; high thermoacoustic conversion efficiency can also be obtained.

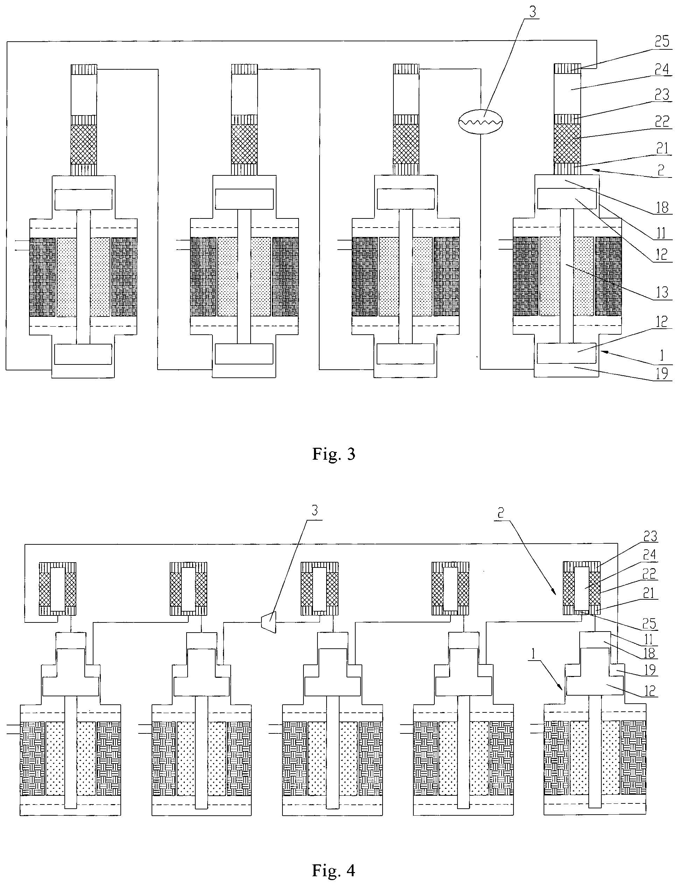

Referring to figure 3, which is a schematic view of the single-stage double-acting traveling-wave thermoacoustic system provided in the second embodiment of the present invention.

In the second embodiment, the single-stage double-acting traveling-wave thermoacoustic system according to the present invention is substantially the same as the single-stage double-acting traveling-wave thermoacoustic system provided in the first embodiment, the difference lies in that, in the present embodiment, the single-stage double-acting traveling-wave thermoacoustic system includes four elementary units, each linear motor 1 includes two cylinders 11 and two pistons 12, two pistons are provided at two sides of the linear motor 1 respectively, the cylinder cavities of two cylinder 11 are positioned at two sides of the linear motor.

Specifically, the working surfaces of piston 12 are parallel, which are positioned at two sides of the linear motor 1, the compression chamber 18 and the expansion chamber 19 are positioned at two sides of the linear motor 1, the first heat exchanger 21 is connected to the compression chamber 18 directly, the third heat exchanger 25 is connected to the expansion chamber 19 of another elementary unit, thereby saving the overall installation space.

In the present embodiment, a DC suppressor 3 is mounted on the connecting pipeline between the third heat exchanger 25 and the expansion chamber 19.

Apparently, the single-stage double-acting traveling-wave thermoacoustic system according to the present embodiment has the same technical effect as the single-stage double-acting traveling-wave thermoacoustic system in the first embodiment, which will not be repeated herein.

It should be noted that, when there are four elementary units, the directions of the working surfaces of the piston 12 can be identical or in opposite directions, that is to say, when the compression chamber 18 in the linear motor 1 is compressed, the expansion chamber 19 can be compressed or expanded simultaneously.

The reason is that, if the compression chamber 18 is compressed, the expansion chamber 19 is also compressed, and the phase difference of the volume flows at the two ends of the thermoacoustic conversion device 2 is 90 degrees. If the compression chamber 18 is compressed, the expansion chamber 19 is also compressed, the phase difference of volume flow between two ends of the thermoacoustic conversion device 2 is 90 degrees, that is to say, regardless of the arrangement of the compression chamber 18 and the expansion chamber 19, the phase difference of volume flow between two ends of the thermoacoustic conversion device 2 is always 90 degrees, the working performances of the single-stage double-acting traveling-wave thermoacoustic system are identical.

When the thermoacoustic conversion device is a thermoacoustic refrigerator, the phase difference of the current between four linear motors is 90 degrees; therefore, three-phase AC cannot be used directly to drive current, the linear motors can be driven only after the phase difference of the current being is adjusted to 90 degrees by phase device. When the thermoacoustic conversion device is a thermoacoustic engine, the phase difference of the current between four linear motors is 90 degrees; therefore, it can be switched-in to the power grid only after being phased by phase device. When the thermoacoustic conversion device is a thermoacoustic heat pump, the compression chamber 18 and the expansion chamber 19 in figure 2 will interchange their position, the linear motor can be driven only after the phase difference of the current being adjusted to 90 degree by phase device.

In addition, there can be three elementary units in the present embodiment, using the above loop structure; high thermoacoustic conversion efficiency can also be obtained.

Referring to figure 4, which is a schematic view of the single-stage double-acting traveling-wave thermoacoustic system provided in the third embodiment of the present invention.

In the third embodiment, the single-stage double-acting traveling-wave thermoacoustic system according to the present invention is substantially the same as the single-stage double-acting traveling-wave thermoacoustic system provided in the first embodiment, the difference lies in that, in the present embodiment, the single-stage double-acting traveling-wave thermoacoustic system includes five elementary units, the shapes of the cylinder 11 and the piston 12 are ladder structures mutually matched; the expansion chamber 19 is a sealed cavity formed at the first ladder of the piston 12 and the cylinder 11, the compression chamber 18 is a sealed cavity formed at the second ladder of the piston 12 and the cylinder 11, the compression chamber 18 is connected to the first heat exchanger, the expansion chamber 19 is connected to the third heat exchanger.

In addition, in the present embodiment, heat regenerator 22 is of a ring-shape structure, the thermal buffer tube 24 is mounted at the inner side of the heat regenerator 22, the first heat exchanger 21 is of a ring-shape structure and connected to one end of the heat regenerator 22, the second heat exchanger 23 is connected to the other end of the heat regenerator 22 and the thermal buffer tube 24, the third heat exchanger 25 is embedded at the inner side of the ring-shape structure of the first heat exchanger 21. The installation space can thus be saved. The design of the loop structure of this embodiment is also suitable for the technical solutions of other embodiments of the present invention.

In the present embodiment, the phase difference of volume flow between two ends of the thermoacoustic conversion device 2 is 108 degrees, which is beneficial to obtain higher thermoacoustic conversion efficiency.

DC suppressor 3 is of a jet pump structure, the jet pump generates differential pressure opposed to DC using the asymmetry of the runner, so as to suppress DC loss caused by the gas medium.

It should be noted that, when there are five or more than five elementary units, the directions of the working surfaces of the pistons 12 are preferably identical, that is to say, the compression chamber 18 and the expansion chamber 19 must be compressed or expanded simultaneously. If one of them is compressed and the other one is expanded, the thermoacoustic conversion efficiency of the thermoacoustic conversion device 2 will be reduced.

When the thermoacoustic conversion device 2 is a thermoacoustic refrigerator, the phase difference of the current between five linear motors is 72 degrees, therefore, a three-phase AC cannot be used directly to drive current, current must be phased by phase device, the linear motors 1 can be driven only after the phase difference of the current is adjusted to 72 degrees. When the thermoacoustic conversion device 2 is a thermoacoustic engine, the phase difference of the current between five linear motors 1 is 72 degrees. Therefore, it can be switched-in to the power grid only after being phased by the phase device. When the thermoacoustic conversion device 2 is a thermoacoustic heat pump, the compression chamber 18 and the expansion chamber 19 in figure 2 will interchange their position, the linear motor can be driven only after the phase difference of the current is adjusted to 72 degrees by the phase device.

In addition, there also can be four elementary units in the present embodiment, using the above loop structure; high thermoacoustic conversion efficiency can also be obtained.

Similarly, the single-stage double-acting traveling-wave thermoacoustic system according to the present embodiment has the same technical effect as the single-stage double-acting traveling-wave thermoacoustic system in the first embodiment, which will not be repeated herein.

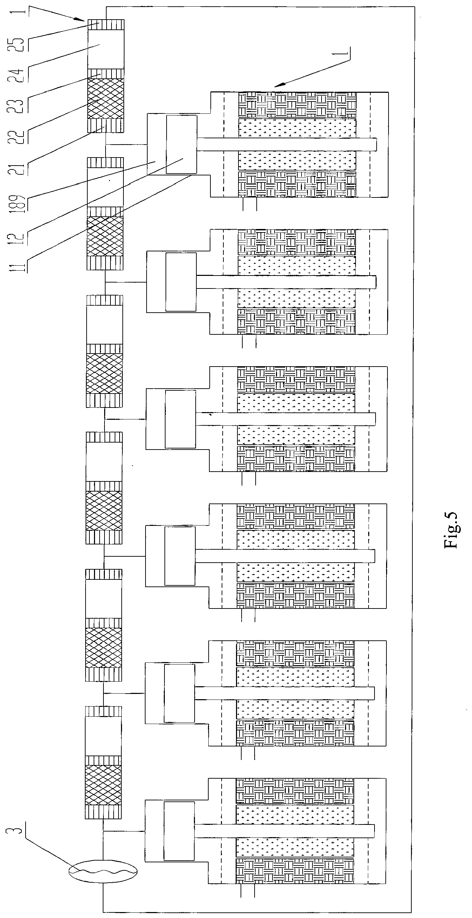

Referring to figure 5, which is a schematic view of the single-stage double-acting traveling-wave thermoacoustic system provided in the fourth embodiment of the present invention.

In the fourth embodiment, the single-stage double-acting traveling-wave thermoacoustic system according to the present invention is substantially the same as the single-stage double-acting traveling-wave thermoacoustic system provided in the first embodiment, the difference lies in that, in the present embodiment, the single-stage double-acting traveling-wave thermoacoustic system includes six elementary units, each linear motor 1 has one cylinder 11, a cylinder cavity is provided within the cylinder 11. The single-stage double-acting traveling-wave thermoacoustic system in the present invention combines the compression chamber 18 and the expansion chamber 19 in the first, second, and third embodiments into one compression-expansion chamber 189.

The compression-expansion chamber 189 is connected to the first heat exchanger 21 and the third heat exchanger 25 respectively, it can be seen that, linear motor 1 with such structure includes a more simple structure and is convenient for manufacturing. In the present embodiment, the phase difference of volume flow between two ends of the thermoacoustic conversion device 2 is 120 degrees, which is beneficial for the thermoacoustic conversion device 2 to obtain higher conversion efficiency of thermoacoustic energy. Similarly, a DC suppressor 3 is mounted in the loop structure to suppress the generation of DC.

When the thermoacoustic conversion device 2 is used as a thermoacoustic refrigerator, the phase difference of the current between six linear motors is 60 degrees, therefore, the three-phase AC cannot be used directly to drive current, current must be phased by the phase device, the linear motors 1 can be driven only after the phase difference of the current is adjusted to 60 degrees. When the thermoacoustic conversion device 2 is a thermoacoustic engine, the phase difference of the current between six linear motors 1 is 60 degrees. Therefore, it can be switched-in to the power grid only after being phased by the phase device.

In addition, there also can be four, five or more elementary units in the present embodiment, using the above loop structure; high thermoacoustic conversion efficiency can also be obtained.

Apparently, the single-stage double-acting traveling-wave thermoacoustic system according to the present embodiment has the same technical effect as the single-stage double-acting traveling-wave thermoacoustic system in the first embodiment, which will not be repeated herein.

It should be noted that, the DC suppressor 3 in the above four embodiments of the present invention may be an elastic diaphragm capsule in which an elastic diaphragm is provided. Under the driving of the air flow, the diaphragm only allows the gas medium to perform a reciprocating motion within the elastic range of the diaphragm, but does not allows the gas medium to flow through the diaphragm directly, causing DC loss. According to the invention the DC suppressor 3 is however of a jet pump structure, the jet pump generates differential pressure opposed to DC using the asymmetry of the runner, so as to suppress DC loss caused by the gas medium.

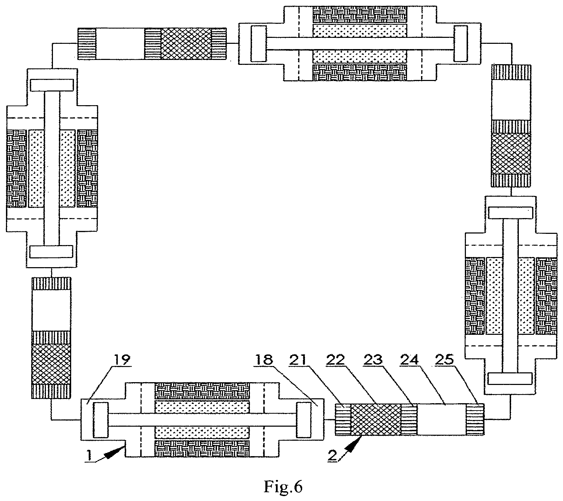

Referring to figure 6, which is a schematic view of the single-stage double-acting traveling-wave thermoacoustic system provided in the fifth embodiment of the present invention.

As shown in figure 6, the thermoacoustic conversion device 2 at upward side and downward side of the figure is a thermoacoustic engine, the thermoacoustic conversion device 2 at right side is a thermoacoustic refrigerator, and the thermoacoustic conversion device 2 at left side is a thermoacoustic heat pump. The linear motor 1 in this system is mainly used for controlling the working frequency of the system and for adjusting the phase relationship of volume flows.

In the present embodiment, the thermoacoustic engine will convert the high temperature heat absorbed into mechanical energy in the form of an acoustic wave, and then the acoustic wave drives the thermoacoustic refrigerator and the heat pump;
The thermoacoustic refrigerators can be used as a cold source for fresh of daily food, the heat pump can provide hot water for daily life.

If there is surplus mechanical energy converted, they can be converted into electricity output by a motor, which can be act as a technical solution of cogeneration for heat, electronic and cold in condition of power shortage.

What need to be explained finally is: the above embodiments is solely adopted to describe the technical solutions of the present invention, instead of limitation; even though elaboration has been made to the present invention in view of the aforementioned embodiments, a person skilled in the art shall understand: he or she can invariably amend the technical solutions disclosed by the aforementioned embodiments, or can equivalently replace some of the technical features thereof; nevertheless, the amendments or replacements shall not deviate the essence of the corresponding technical solutions from the spirit and scope of the technical solutions according to each embodiment of the present invention.

## Claims

1. A single-stage double-acting traveling-wave thermoacoustic system, comprising at least three elementary units, wherein each elementary unit comprises a linear motor (1) and a thermoacoustic conversion device (2); the linear motor (1) comprising a cylinder (11) and a piston (12), wherein the piston (12) can perform a straight reciprocating motion in the cylinder (11); the thermoacoustic conversion device (2) comprises a first heat exchanger (21), a heat regenerator (22), a second heat exchanger (23), a thermal buffer tube (24) and a third heat exchanger (25) connected in sequence;
the first heat exchanger (21) and the third heat exchanger (25) of each thermoacoustic conversion device (2) are connected to cylinder cavities of different linear motors (1) respectively, forming a loop structure for flow of a gas medium, **characterized in that**
at least one DC suppressor (3) is mounted on a connecting pipeline of the loop structure, and the DC suppressor (3) is mounted between the first heat exchanger (21) and the cylinder cavity, or between the third heat exchanger (25) and the cylinder cavity, and
the DC suppressor (3) is a jet pump.

2. The single-stage double-acting traveling-wave thermoacoustic system according to claim 1, wherein each linear motor (1) comprises two cylinder cavities, and wherein both of the cylinder cavities are a compression chamber (18) and an expansion chamber (19), and wherein the compression chamber (18) is connected to the first heat exchanger (21), and the expansion chamber (19) is connected to the third heat exchanger (25).

3. The single-stage double-acting traveling-wave thermoacoustic system according to claim 1, wherein each linear motor (1) comprises two cylinder cavities, the two cylinder cavities are a compression chamber (18) and an expansion chamber (19), wherein the compression chamber (18) is connected to the third heat exchanger (25), and the expansion chamber (19) is connected to the first heat exchanger (21).

4. The single-stage double-acting traveling-wave thermoacoustic system according to claim 2, wherein there is one piston (12) in the linear motor (1), and the two cylinder cavities are formed at two sides of the piston (12).

5. The single-stage double-acting traveling-wave thermoacoustic system according to claim 2, wherein there is one piston (12) in the linear motor (1) and shapes of the cylinder (11) and the piston (12) is of ladder structure mutually matched; the two cylinder cavities are formed at different ladders on the same side of the piston (12).

6. The single-stage double-acting traveling-wave thermoacoustic system according to claim 2, wherein there are two pistons (12) in the linear motor (1), and wherein the two pistons (12) are provided at two ends of the linear motor (1) respectively, and wherein the two cylinder cavities are positioned at two ends of the linear motor (1) respectively.

7. The single-stage double-acting traveling-wave thermoacoustic system according to claim 1, wherein each linear motor (1) comprises one cylinder cavity, which is connected to the first heat exchanger (21) and the third heat exchanger (25) in different thermoacoustic conversion devices (2).

8. The single-stage double-acting traveling-wave thermoacoustic system according to claim 7, wherein there is one piston (12) in the linear motor (1) and the cylinder cavity is formed at one side of the piston (12).

9. The single-stage double-acting traveling-wave thermoacoustic system according to claim 1, 4, or 6, wherein working surfaces of the piston (12) in each cylinder cavity can be parallel and in opposite directions, and there are three or four elementary units.

10. The single-stage double-acting traveling-wave thermoacoustic system according to claim 1, 5, or 8, wherein working surfaces of the piston (12) in each cylinder cavity is parallel and in the same direction, and there are four to twelve elementary units.

11. The single-stage double-acting traveling-wave thermoacoustic system according to any one of claims 1-8, wherein the heat regenerator (22) is of a loop structure, the thermal buffer tube (24) is mounted at the inner side of the heat regenerator (22), and wherein the first heat exchanger (21) is of a ring-shape structure and connected to one end of the heat regenerator (22), and wherein the second heat exchanger (23) is connected to another end of the heat regenerator (22) and the thermal buffer tube (24), and wherein the third heat exchanger (25) is embedded at inner side of the loop structure of the first heat exchanger (21).

## Patentansprüche

1. Einstufiges thermoakustisches Wanderwellensystem mit doppeltem Wirkungsmechanismus, das wenigstens drei elementare Einheiten umfasst, wobei jede elementare Einheit einen Linearmotor (1) und eine thermoakustische Umwandlungsvorrichtung (2) umfasst; wobei der Linearmotor (1) einen Zylinder (11) und einen Kolben (12) umfasst, wobei der Kolben (12) eine gerade Hin- und Herbewegung in dem Zylinder (11) ausführen kann; und die thermoakustische Umwandlungsvorrichtung (2) einen ersten Wärmetauscher (21), einen Wärmeregenerator (22), einen zweiten Wärmetauscher (23), ein Wärmepufferrohr (24) und einen dritten Wärmetauscher (25) umfasst, die in Reihe verbunden sind;
wobei der erste Wärmetauscher (21) und der dritte Wärmetauscher (25) jeder thermoakustischen Umwandlungsvorrichtung (2) jeweils mit Zylinderhohlräumen verschiedener Linearmotoren (1) verbunden sind und so eine Schleifenstruktur zum Strömen eines gasförmigen Mediums ausbilden, **dadurch gekennzeichnet, dass**
wenigstens ein Gleichstrombegrenzer (3) an einer Verbindungsleitung der Schleifenstruktur angebracht ist und der Gleichstrombegrenzer (3) zwischen dem ersten Wärmetauscher (21) und dem Zylinderhohlraum oder zwischen dem dritten Wärmetauscher (25) und dem Zylinderhohlraum angebracht ist und
der Gleichstrombegrenzer (3) eine Strahlpumpe ist.

2. Einstufiges thermoakustisches Wanderwellensystem mit doppeltem Wirkungsmechanismus nach Anspruch 1, wobei jeder Linearmotor (1) zwei Zylinderhohlräume umfasst und wobei beide der Zylinderhohlräume eine Verdichtungskammer (18) und eine Expansionskammer (19) sind und wobei die Verdichtungskammer (18) mit dem ersten Wärmetauscher (21) verbunden ist und die Expansionskammer (19) mit dem dritten Wärmetauscher (25) verbunden ist.

3. Einstufiges thermoakustisches Wanderwellensystem mit doppeltem Wirkungsmechanismus nach Anspruch 1, wobei jeder Linearmotor (1) zwei Zylinderhohlräume umfasst und die zwei Zylinderhohlräume eine Verdichtungskammer (18) und eine Expansionskammer (19) sind, wobei die Verdichtungskammer (18) mit dem dritten Wärmetauscher (25) verbunden ist und die Expansionskammer (19) mit dem ersten Wärmetauscher (21) verbunden ist.

4. Einstufiges thermoakustisches Wanderwellensystem mit doppeltem Wirkungsmechanismus nach Anspruch 2, wobei ein Kolben (12) in dem Linearmotor (1) vorhanden ist und die zwei Zylinderhohlräume auf zwei Seiten des Kolbens (12) ausgebildet sind.

5. Einstufiges thermoakustisches Wanderwellensystem mit doppeltem Wirkungsmechanismus nach Anspruch 2, wobei ein Kolben (12) in dem Linearmotor (1) vorhanden ist und die Formen des Zylinders (11) und des Kolbens (12) eine zueinander passende Leiterstruktur aufweisen; und die zwei Zylinderhohlräume an verschiedenen Leitern auf der gleichen Seite des Kolbens (12) ausgebildet sind.

6. Einstufiges thermoakustisches Wanderwellensystem mit doppeltem Wirkungsmechanismus nach Anspruch 2, wobei zwei Kolben (12) in dem Linearmotor (1) vorhanden sind und wobei die zwei Kolben (12) jeweils an zwei Enden des Linearmotors (1) vorgesehen sind und wobei die zwei Zylinderhohlräume jeweils an zwei Enden des Linearmotors (1) angeordnet sind.

7. Einstufiges thermoakustisches Wanderwellensystem mit doppeltem Wirkungsmechanismus nach Anspruch 1, wobei jeder Linearmotor (1) einen Zylinderhohlraum umfasst, der mit dem ersten Wärmetauscher (21) und dem dritten Wärmetauscher (25) in verschiedenen thermoakustischen Umwandlungsvorrichtungen (2) verbunden ist.

8. Einstufiges thermoakustisches Wanderwellensystem mit doppeltem Wirkungsmechanismus nach Anspruch 7, wobei ein Kolben (12) in dem Linearmotor (1) vorhanden ist und der Zylinderhohlraum auf einer Seite des Kolbens (12) ausgebildet ist.

9. Einstufiges thermoakustisches Wanderwellensystem mit doppeltem Wirkungsmechanismus nach Anspruch 1, 4 oder 6, wobei Arbeitsflächen des Kolbens (12) in jedem Zylinderhohlraum parallel und in entgegengesetzten Richtungen verlaufen können und drei oder vier elementare Einheiten vorhanden sind.

10. Einstufiges thermoakustisches Wanderwellensystem mit doppeltem Wirkungsmechanismus nach Anspruch 1, 5 oder 8, wobei Arbeitsflächen des Kolbens (12) in jedem Zylinderhohlraum parallel und in der gleichen Richtung verlaufen und vier bis zwölf elementare Einheiten vorhanden sind.

11. Einstufiges thermoakustisches Wanderwellensystem mit doppeltem Wirkungsmechanismus nach einem der Ansprüche 1-8, wobei der Wärmeregenerator (22) eine Schleifenstruktur aufweist und das Wärmepufferrohr (24) an der Innenseite des Wärmeregenerators (22) angebracht ist und wobei der erste Wärmetauscher (21) eine ringförmige Struktur aufweist und mit einem Ende des Wärmeregenerators (22) verbunden ist und wobei der zweite Wärmetauscher (23) mit einem anderen Ende des Wärmeregenerators (22) und dem Wärmepufferrohr (24) verbunden ist und wobei der dritte Wärmetauscher (25) an einer Innenseite der Schleifenstruktur des ersten Wärmetauschers (21) eingebettet ist.

## Revendications

1. Système thermoacoustique double action monoétage à onde progressive, comprenant au moins trois unités de base, dans lequel chaque unité de base comprend un moteur linéaire (1) et un dispositif de conversion thermoacoustique (2) ; le moteur linéaire (1) comprenant un cylindre (11) et un piston (12), dans lequel le piston (12) peut effectuer un mouvement linéaire alternatif dans le cylindre (11) ; le dispositif de conversion thermoacoustique (2) comprend un premier échangeur de chaleur (21), un régénérateur de chaleur (22), un deuxième échangeur de chaleur (23), un tube tampon thermique (24) et un troisième échangeur de chaleur (25) reliés en séquence ;
le premier échangeur de chaleur (21) et le troisième échangeur de chaleur (25) de chaque dispositif de conversion thermoacoustique (2) sont reliés aux chambres des cylindres de différents moteurs linéaires (1) respectivement, formant ainsi une structure en boucle pour le flux d'un milieu gazeux, **caractérisé en ce que**
au moins un filtre antiparasite CC (3) est monté sur une conduite de liaison de la structure en boucle, et le filtre antiparasite CC (3) est monté entre le premier échangeur de chaleur (21) et la chambre de cylindre, ou entre le troisième échangeur de chaleur (25) et la chambre de cylindre, et
le filtre antiparasite CC (3) est une pompe à jet.

2. Système thermoacoustique double action monoétage à onde progressive selon la revendication 1, dans lequel chaque moteur linéaire (1) comprend deux chambres des cylindres, et dans lequel les deux chambres des cylindres sont une chambre de compression (18) et une chambre d'expansion (19), et dans lequel la chambre de compression (18) est reliée au premier échangeur de chaleur (21), et la chambre d'expansion (19) est reliée au troisième échangeur de chaleur (25).

3. Système thermoacoustique double action monoétage à onde progressive selon la revendication 1, dans lequel chaque moteur linéaire (1) comprend deux chambres des cylindres, les deux chambres des cylindres sont une chambre de compression (18) et une chambre d'expansion (19), dans lequel la chambre de compression (18) est reliée au troisième échangeur de chaleur (25), et la chambre d'expansion (19) est reliée au premier échangeur de chaleur (21).

4. Système thermoacoustique double action monoétage à onde progressive selon la revendication 2, dans lequel un piston (12) est présent dans le moteur linéaire (1), et les deux chambres des cylindres sont formées sur deux côtés du piston (12).

5. Système thermoacoustique double action monoétage à onde progressive selon la revendication 2, dans lequel un piston (12) est présent dans le moteur linéaire (1) et les formes du cylindre (11) et du piston (12) sont des structures en échelle associées ; les deux chambres des cylindres sont formées sur différentes échelles du même côté du piston (12).

6. Système thermoacoustique double action monoétage à onde progressive selon la revendication 2, dans lequel deux pistons (12) sont présents dans le moteur linéaire (1), et dans lequel les deux pistons (12) sont prévus à deux extrémités du moteur linéaire (1) respectivement, et dans lequel les deux chambres des cylindres sont positionnées à deux extrémités du moteur linéaire (1) respectivement.

7. Système thermoacoustique double action monoétage à onde progressive selon la revendication 1, dans lequel chaque moteur linéaire (1) comprend une chambre de cylindre, qui est reliée au premier échangeur de chaleur (21) et au troisième échangeur de chaleur (25) dans différents dispositifs de conversion thermoacoustique (2).

8. Système thermoacoustique double action monoétage à onde progressive selon la revendication 7, dans lequel un piston (12) est présent dans le moteur linéaire (1) et la chambre de cylindre est formée sur un côté du piston (12).

9. Système thermoacoustique double action monoétage à onde progressive selon la revendication 1, 4 ou 6, dans lequel des surfaces actives du piston (12) dans chaque chambre de cylindre peuvent être parallèles et dans des directions opposées, et trois ou quatre unités de base sont présentes.

10. Système thermoacoustique double action monoétage à onde progressive selon la revendication 1, 5 ou 8, dans lequel des surfaces actives du piston (12) dans chaque chambre de cylindre sont parallèles et dans la même direction, et quatre à douze unités de base sont présentes.

11. Système thermoacoustique double action monoétage à onde progressive selon l'une quelconque des revendications 1 à 8, dans lequel le régénérateur de chaleur (22) a une structure en boucle, le tube tampon thermique (24) est monté sur le côté intérieur du régénérateur de chaleur (22), et dans lequel le premier échangeur de chaleur (21) a une structure en anneau et est relié à une extrémité du régénérateur de chaleur (22), et dans lequel le deuxième échangeur de chaleur (23) est relié à une autre extrémité du régénérateur de chaleur (22) et au tube tampon thermique (24), et dans lequel le troisième échangeur de chaleur (25) est intégré à un côté intérieur de la structure en boucle du premier échangeur de chaleur (21 ).
